# EUROPEAN PATENT SPECIFICATION

(11) **EP 2 646 223 B1**
(45) Date of publication and mention of the grant of the patent: **28.06.2017**
(21) Application number: 11799217.2
(22) Date of filing: 29.11.2011
(51) Int. Cl.: B29C 67/00

(54) **STEREOLITHOGRAPHY SYSTEMS AND METHODS USING INTERNAL LASER MODULATION**
STEREOLITHOGRAFISCHE SYSTEME UND VERFAHREN MIT INTERNER LASERMODULATION
SYSTÈMES ET PROCÉDÉS DE STÉRÉOLITHOGRAPHIE UTILISANT UNE MODULATION DE LASER INTERNE

(30) Priority: 29.11.2010 US 417719 P
(43) Date of publication of application: 09.10.2013
(73) Proprietor: 3D Systems, Inc., Rock Hill, SC 29730 (US)
(72) Inventor: COOPER, Guthrie, Mill Spring NC 28756 (US)
(74) Representative: dompatent von Kreisler Selting Werner - Partnerschaft von Patent- und Rechtsanwälten mbB
(86) International application number: PCT/US2011/062361
(87) International publication number: WO 2012/074986

(56) References cited:
- US-A- 5 840 239
- "Optical Advances Speed Rapid Prototyping", Edmund Optics , 9 March 2009 (2009-03-09), XP002672559, Retrieved from the Internet: URL:http://www.makepartsfast.com/2009/03/7 08/optical-advances-speed-rapid-prototypin g [retrieved on 2012-03-29]

## Description

### Field

The disclosure is directed toward stereolithography systems, and in particular to stereolithography systems and methods using internal laser modulation, and in particular either current modulation or pulse-width modulation.

### Background

A number of technologies presently exist for the rapid creation of models, prototypes, and objects ("parts") for limited-run manufacturing. These rapid prototyping technologies are generally called solid freeform fabrication (SFF) techniques.

A process of forming a three-dimensional object from build material which may use a diode-pumped solid state (DPSS) laser is described in "Optical Advances Speed Rapid Prototyping" (Edmund Optics: URL:http://www.makepartsfast.com/2009/03/708/optical-advances-speed-rapid-prototyping/). The described process uses a specific scanning lens to minimize distortion and form an image on a flat plane.

Generally in SFF, three-dimensional objects are produced from a build material in an additive fashion, as opposed to conventional fabrication techniques, which are generally subtractive in nature. For example, in most conventional fabrication techniques, material is removed by machining operations or shaped in a die or mold and then trimmed. In contrast, additive fabrication techniques incrementally add portions of a build material to targeted locations, layer by layer, to build the object, which can be a complex part. SFF technologies typically utilize a computer graphic representation of the object part and a supply of a build material to fabricate the object in successive layers.

One type of SFF technique is called stereolithography, in which a tightly focused beam of energy, typically from a laser and in the ultraviolet (UV) wavelength band, is scanned across sequential layers of a liquid photopolymer resin to selectively cure the resin of each layer to form a multilayered object. Stereolithography utilizes a "dot stitching" pattern to cure the resin.

An example laser used in stereolithography is a diode-pumped frequency-multiplied (e.g., frequency-tripled or frequency-quadrupled) solid state (DPFMSS) laser that employs non-linear crystals. A typical DPFMSS laser includes one or more pump laser diodes, three or four non-linear crystals and a Q-switching element. Such lasers must satisfy certain stability requirements to ensure adequate quality of the stereolithographic process, which is reflected in the degree of uniform overlap of the stitched dots. The DPFMSS laser parameters that affect the quality of the stereolithographic process include the divergence of the laser beam, the beam waist position, the beam quality factor or M² value of the laser, the laser power, the pulse-to-pulse stability, and the pointing stability i.e., the ability to control the laser beam direction.

Historically, the above-described DPFMSS laser parameters have been difficult to control when the laser is operated by internal power modulation, i.e., by electrically modulating the laser cavity via an electrical modulation current provided to the pump laser diodes. Consequently, the DPFMSS lasers have been operated at a constant Q-switch repetition rate and at substantially full power and by using external modulation.

In particular, the external modulation has been carried out using an external modulation system disposed in the external optical path between the output end of the laser and the scanning mirror system. The term external modulation system is understood to mean at least one modulator, and can include additional passive or active components that operate in cooperation with the at least one modulator. A specific example of an external modulation system has an acousto-optic modulator (AOM) cooperatively arranged with a pinhole to control the laser output power and beam directionality. The AOM is typically modulated at a high frequency, e.g., in the range between 20 MHz to 80 MHz.

Because an AOM is a diffractive component, its exact placement in space relative to the DPFMSS laser is critical and typically requires a highly trained laser technician to perform the necessary alignment, which can take hours. Also, because the AOM is the first component in line with the laser beam, any dust, or microfractures create beam scattering. This can be detrimental to the quality of the stereolithographic process because the UV curable resin may solidify over time by exposure to this scattered light. Also, to maintain high UV power at low cost, the non-linear crystals need to be translated back and forth to even out their aging. This translation itself is a contributor to stability and reliability of the parameters for build process. Moreover, running the DPFMSS laser at maximum power for prolonged periods shortens the life of the laser.

In view of the above complexities associated with performing freeform fabrication with an externally modulated DPFMSS laser, it would be much preferred to be able to perform freeform fabrication using a DPFMSS laser without the need for an external modulation system.

### SUMMARY

Additional features and advantages of the disclosure will be set forth in the Detailed Description that follows, and in part will be readily apparent to those skilled in the art from that description or recognized by practicing the disclosure as described herein, including the Detailed Description, the claims, as well as the appended drawings. The claims are incorporated into and constitute part of the Detailed Description as set forth below.

An aspect of the disclosure is a method according to claim 1 or according to claim 2 of forming a three-dimensional object from a build material using a DPFMSS laser having a Q-switch and a laser diode assembly. The methods include controlling the DPFMSS laser by internal modulation using either pulse-width modulation of the Q-switch or current modulation of the laser diode assembly, to generate a laser beam comprising laser pulses having a select energy based on build instructions for building the three-dimensional object. The methods further include directing the laser beam from the laser to a scanning system over an external optical path without performing external modulation within the external optical path. The methods also include, using the scanning system, directing the laser beam to a focus position on the build material to form bullets therein to define a build layer based on the build instructions. The methods additionally include repeating the build layer formation to form the three-dimensional object from the build material while adjusting the laser power and focus position to account for variations in the laser power and the focus position caused by the internal modulation process.

Another aspect of the disclosure is the above-described method, wherein the DPFMSS laser is controlled by current modulation, and further comprising operating the Q-switch at a fixed frequency, monitoring an amount of power in the laser beam traversing the optical path, and controlling an amount of current modulation to the laser diode assembly based on the monitored amount of power.

Another aspect of the disclosure is the method as described immediately above, and further comprising deflecting a portion of the laser beam to a laser power meter.

Another aspect of the disclosure is the above-described method, further including monitoring the focus position, and controlling the scanning system to adjust for a variation in the position of the focus spot relative to the build instructions.

Another aspect of the disclosure is the above-described method, wherein controlling the DPFMSS laser employs pulse-width modulation, and further comprising performing the pulse-width modulation with a duty cycle of either between 0 % and 99.9%, and providing a substantially constant current to the laser diode assembly.

Another aspect of the disclosure is a stereolithography system according to claim 7 for forming a three-dimensional object from a build material. The system includes a DPFMSS laser having a Q-switch and a laser diode assembly, wherein the laser is configured to generate a laser beam having laser pulses. The system includes a controller having build instructions for building the three-dimensional object, wherein the build instructions define select amounts of energy in the laser pulses. The controller is configured to cause the DPFMSS laser to operate in a current modulation mode to provide the select amounts of energy to the laser pulses. The system also has a scanning system arranged to receive the laser beam from the DPFMSS laser over an external optical path that does not include an external modulation system. The scanning system is configured to direct the laser beam to a focus position on the build material to form bullets therein to define a build layer based on the build instructions. The system also has a laser power meter configured to measure an amount of power in the laser beam and provide an electrical signal to the controller representative of the amount of laser beam power. The controller is configured to adjust an amount of current provided to the laser diode assembly to adjust for variations in the laser beam power.

Another aspect of the disclosure is a light-deflecting member configured to deflect a portion of the laser beam traveling within the external optical path to a laser power meter.

Another aspect of the disclosure is the system described above, further comprising a laser focus position detector arranged in optical communication with the build surface-to detect the focus position on the build surface and provide an electrical signal to the controller representative of the focus position. The controller is configured to adjust the scanning system to adjust for a variation in the focus position.

Another aspect of the disclosure is a stereolithography system according to claim 10 for forming a three-dimensional object from a build material. The system has a DPFMSS laser having a Q-switch and a laser diode assembly and configured to generate a laser beam having laser pulses. The system also has a controller having build instructions for building the three-dimensional object. The build instructions define select amounts of energy in the laser pulses. The controller is configured to cause the DPFMSS laser to operate in a pulse-width modulation mode to provide the select amounts of energy to the laser pulses. The system also has a scanning system arranged to receive the laser beam from the DPFMSS laser over an external optical path that does not include an external modulation system. The scanning system is configured to direct the laser beam to a focus position on the build material to form bullets therein to define a build layer based on the build instructions.

Another aspect of the disclosure is the system as described above, further comprising the controller configured to provide a substantially constant current to the laser diode assembly while performing the pulse-width modulation with a duty cycle of either between 0 % and 99.9%.

Another aspect of the disclosure is system as described above, further comprising a laser focus position detector arranged in optical communication with build surface to detect the focus position on the build surface and provide an electrical signal to the controller representative of the focus position, the controller being configured to adjust the scanning system to adjust for a variation in the focus position.

Another aspect of the disclosure is the system described immediately above, further comprising a laser power meter configured to measure an amount of power in the laser beam and provide an electrical signal to the controller representative of the amount of laser beam power, the controller being configured to adjust the pulse-width modulation amount to adjust for a variation in the laser beam power.

### BRIEF DESCRIPTION OF THE DRAWINGS

FIG. 1A is a schematic diagram of an example stereolithography system according to the disclosure, wherein the stereolithography system utilizes a DPFMSS laser that operates using internal modulation in either current modulation (CM) mode or pulse-width modulation (PWM) mode;
FIG. 1B is a close-up view of a portion of a prior art stereolithography system that includes an external modulation system within the external optical path;
FIG. 2 is a schematic diagram of a series of laser pulses that make up the laser beam, illustrating how the laser pulses have select amounts of energy based on the build information, and how the select amounts of energy are defined by the PWM or CM of the DPFMSS laser;
FIG. 3 includes an upper plot of the Q-switch signal versus time, illustrating an.example of the PWM control of the Q-switch, and a lower plot of the corresponding output power in the laser pulses corresponding to the PWM control of the Q-switch in the upper plot;
FIG. 4 plots the output power (mW) versus duty cycle (%) for a prior art DPFMSS laser that utilizes an external modulation system (curve C1) and for the DPFMSS laser of the disclosure that utilizes PWM and no external modulation system;
FIG. 5A provides schematic top-down and cross-sectional views of example bullets formed in the build material, illustrating the overlap of the laser pulses in forming the bullets; and
FIG. 5B is similar to FIG. 5A and shows an example of a displaced bullet formed by a displaced laser pulse, and an oversized bullet formed by a laser pulse having too much energy.

The various elements depicted in the drawing are merely representational and are not necessarily drawn to scale. Certain sections thereof may be exaggerated, while others may be minimized. The drawing is intended to illustrate an example embodiment of the disclosure that can be understood and appropriately carried out by those of ordinary skill in the art.

### DETAILED DESCRIPTION

The following U.S. patents are considered: 5,339,323; 5,840,239; 6,001,297; 6,141,369; 6,172,996; 6,215,095; 6,590,911; 6,931,035; 7,130,321; and 7,292,387.

The following non-patent references are considered:

"Fundamental Processes," Rapid Prototyping & Manufacturing: Fundamentals of Stereolithography, Ed: P.F. Jacobs. pp. 79-110, Society of Manufacturing Engineers, Dearborn, Mich., 1992; and

"Photopolymer Photospeed and Laser Scanning Velocity," Advances in the Imaging System, Stereolithography and other RP&M Technologies, P. F. Jacobs, pp 54-56, 110-112, Society of Manufacturing Engineers, Dearborn, Mich., 1996.

### Stereolithography

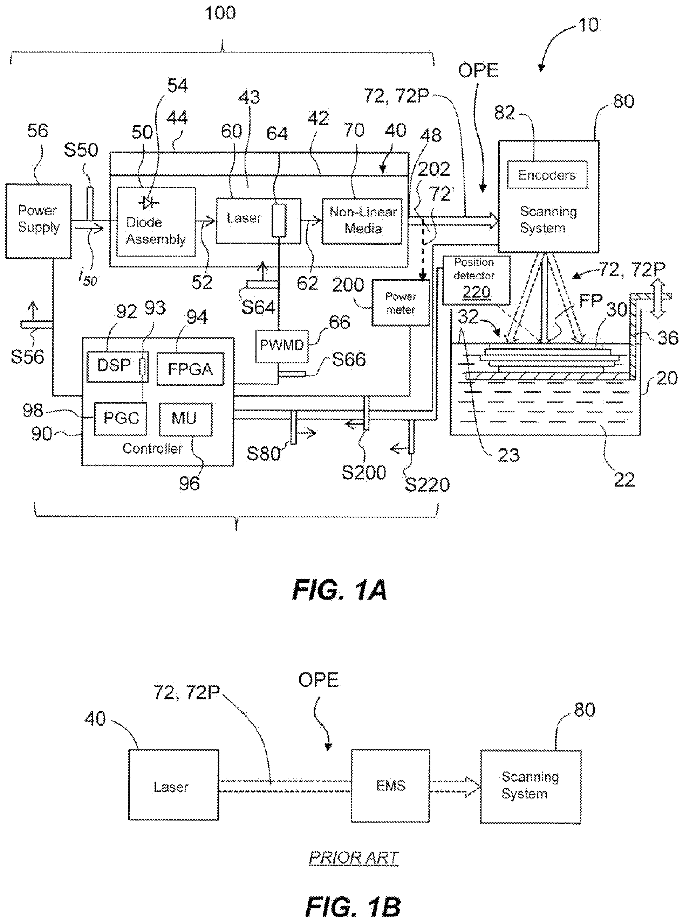

Stereolithography Is presently the dominant method of rapid prototyping and manufacturing (RP&M). Stereolithography may be defined as a technique for the automated fabrication of three-dimensional objects from a fluid-like build material utilizing selective exposure of layers of the material at a working surface to solidify and adhere successive layers (i.e., laminae) of the object. In stereolithography, data representing the three-dimensional object is input as, or converted into, two-dimensional layer data representing cross-sections of the object. As shown in FIG. 1A, multiple layers (laminae) 30 (i.e., layers 30-1. 30-2,..30-i) of a build material 22 are successively formed and selectively transformed (i.e., cured) into successive layers according to the two-dimensional layer data to form a three-dimensional object 32. In an example, a given build layer 30 has a thickness on the order of 0.004 inches (0.1 millimeters).

Due to advances in solid-state laser development, the stereolithographic art has recently started to turn away from the use of inefficient gas lasers and has begun to turn to frequency-multiplied, solid-state lasers. Frequency tripling of 1049 nm-1064 nm Nd:NYAG, Nd:YVO₄, and Nd:YLF lasers produces wavelengths of 355 nm (YAG and YVO₄), 351 nm (YLF) and 349 nm (YLF), which are all suitable for use in stereolithography with current resin formulations. Frequency quadrupling of 1342 nm Nd/YVO₄ lasers produces a wavelength (335 nm) which is suitable for stereolithography as well.

More detail about solid-state lasers can be found in U.S. Pat. No. 5,840,235. As applied to stereolithography up to this point in time, these lasers operate in a constant-repetition, pulsed mode and with an external modulation system, as mentioned above and as described in detail in U.S. Pat. No. 6,215,095.

### Stereolithography system

FIG. 1A is a schematic diagram of an example configuration of a stereolithography system ("system") 10 that includes a laser apparatus 100 with laser 40 according to the disclosure. An example laser 40 includes, but is not limited to, the EXPLORER® laser available from Newport Corporation of Santa Clara, California. To achieve the UV wavelength of 355 nm, the fundamental frequency line 1064 nm generated from this particular laser apparatus is tripled.

System 10 includes a vat 20 that contains a build material 22 (e.g., a photopolymer) from which the aforementioned layers (laminae) 30 are formed to build the aforementioned three-dimensional object 32. A movable support device 36, such as an elevator and build platform, provides a supporting surface, under the build surface 23 of build material 22, for each layer 30 being formed.

System 10 also includes a controller 90 that includes a digital signal processor (DSP) 92, a field-programmable gate array (FPGA) 94, a memory unit (MU) 96 and a pulse generation circuit (PGC) 98 (which may also be located in power supply 56, introduced and discussed below). MU 96 is configured to store build instructions (e.g., a CAD/CAM file) for building object 32. Controller 90 is configured to control the operation of system 10 based on the build instructions stored in MU 96. In an alternative embodiment, the build instructions reside in an external unit (e.g., a remote CAD/CAM system) that is operably linked (e.g., via an Ethernet cable) to controller 90. The build instructions include vectors that convey information about the required laser beam power (e.g., pulse energy) and direction for each laser-pulse exposure of build material 22. In an example, PGC 98 is configured to cause laser apparatus 100 to emit laser pulses 72P based on mirror position readings from encoders 82 of scanning system 80.

System 10 also includes a DPFMSS laser 40. Example DPFMSS lasers 40 include Nd:OrthoVanadate lasers and Nd:Yag lasers. DPFMSS laser 40 includes a housing 42 having an interior 43. A heat sink 44 is disposed to be in thermal communication with housing 42 and is configured to remove heat from interior 43 to control the temperature therein. In an example, heat sink 44 is configured to control the temperature within housing interior 43 to within +/- 0.1 °C. Laser 40 has an output end 48.

DPFMSS laser includes a laser diode assembly 50 comprising laser diodes 54 (one such laser diode is shown) that emit pump light 52 of wavelength λ_{P} of 808 nm, for example. Laser diode assembly 50 is electrically connected to a power supply 56 that provides electrical power (i.e., a current *i₅₀*) to the laser diode assembly 50 via an electrical signal S50. Power supply 56 is electrically connected to controller 90 and is controlled thereby via a control signal S56. In an example, PGC 98 defines control signal S56, which determines the amount of current *i₅₀* that power supply 56 provides to laser diode assembly 50.

Laser diode assembly 50 is optically coupled to a laser oscillator 60 in laser 40. Laser oscillator 60 emits laser light 62 having a laser wavelength λ_{L}. Pump light 52 from laser diode assembly 50 is used to excite the gain medium (not shown) in laser oscillator 60 and produce a population inversion within the gain medium, thereby providing the source of optical gain for the laser 40.

A Q-switch 64 resides within the cavity of laser oscillator 60 along the internal optical path. The Q-switch 64 is electrically connected to a pulse-width modulator driver (PWMD) 66, which in turn is electrically connected to controller 90 and is controlled by a control signal S66. The Q-switch 64 is controlled via a control signal S64 from the PWMD 66. In an example, Q-switch 64 is caused to operate in a pulse-width modulation (PWM) mode, causing the laser cavity to operate laser apparatus 100 as a repetitively pulsed laser. In another example discussed below where current modulation (CM) is employed, Q-switch 64 is operated at a fixed frequency.

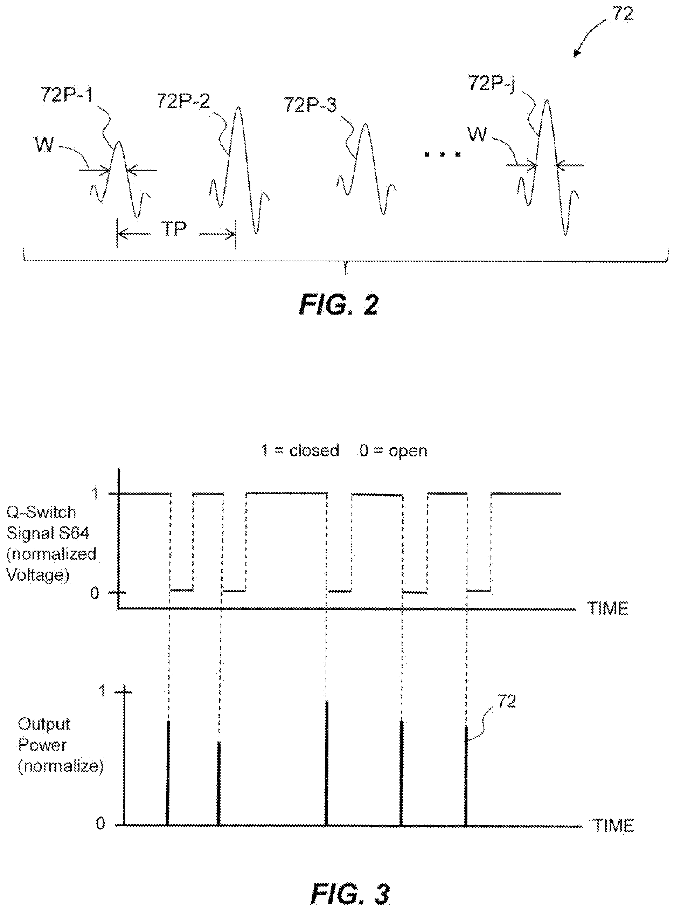

DPFMSS laser 40 also includes downstream of laser oscillator 60 a non-linear media (NLM) system 70 configured to receive laser light 62 and frequency multiply this light to form a frequency-multiplied laser beam 72 of wavelength λ_{F}. With reference to FIG. 2, Light 72 is made up of laser pulses 72P whose energy is defined by either a current modulation process or a pulse-width modulation process.

In an example, NLM system 70 includes multiple non-linear crystals. Example non-linear crystals include Nd:YVO₄ crystal i.e., Neodymium Doped Yttrium Vanadate. The Nd:YVO₄ crystal pumped by light having a wavelength of 808 nm generates and amplifies a variety of wavelengths, including a dominant line at 1064 nm and a secondary line at 1342 nm. In one embodiment, all of the wavelengths generated by the crystal are suppressed, except the radiation emitted at 1 342 nm. This light is then frequency quadrupled to form laser beam 72 having a UV wavelength A_{F} = 355 nm.

In one embodiment, NLM system 70 includes a lithium borate crystal (LBO), having plane-parallel surfaces that are polished and AR-coated at 671 and 1342 nm and configured to provide sufficient conversion efficiency and the appropriate phase matching. Other types of suitable second-harmonic crystals can be employed in NLM system 70 and include, for example, KTP, LilO₃ and DCDA, BBO, CLBO Type I, and LBO Type I.

Various methods for establishing optimal geometries for NLM system 70 for the frequency multiplication process is described in the reference by V. G. Dmtriev, G. G. Gurzadyan, D. N. Nikogosyan, Handbook of Nonlinear Optical Crystals (1991), which is incorporated herein by reference. In an example, phase-matching errors can be reduced by using custom optical components and configurations that address phase-matching issues, including issues of phase going forward through the NLM system 70 and the reverse phase reflected back from the resonator. Such components and configurations can include: Custom cut crystal wedge angles, computer optimized dielectric mirror coatings, and Piezo transducer control of the laser cavity length.

Laser beam 72 exits NLM system 70 and exits laser 40 at output end 48, whereupon the laser beam travels over an external optical path OPE to a scanning system 80. Scanning system 80 is configured to direct laser beam 72 to a surface 23 (i.e., a build surface or workpiece surface) of build material 22 in vat 20 to form the aforementioned layers (laminae) 30. Controller 90 controls the operation of scanning system 80 based on the build instructions therein, e.g., a CAD file, STL file, or like file. Scanning system 80 may include, for example, scanning mirrors (not shown) driven by corresponding motor (not shown). Scanning system 80 includes mirror encoders ("encoders") 82 that relay mirror position data to controller 90.

System 10 may include a number of other passive optical components that are not shown, such as dichroic filters, mirrors, lenses, etc. that may be operably arranged in the optical path between laser diode assembly 50 and scanning system 80 to facilitate the operation of the system as a whole. FIG. 1A shows an example where a light-deflecting element 202 resides in external optical path OPE, for reasons described below.

FIG. 1B is a close-up view of a portion of a prior art stereolithography system showing an external modulation system EMS disposed within external optical path OPE. System 10 of FIG. 1 A does not include such an external modulation system EMS in the external optical path OPE, and in particular does not include an AOM (or other active optical element), the AOM mount (with requires six degrees of freedom of movement) or a pinhole aperture cooperatively arranged with the AOM to facilitate beam alignment. In addition, system 10 does not include an AOM driver, which generates substantial RF noise.

System 10 also does not require NLM system 70 to scan the non-linear media therein to prevent premature aging of the media, i.e., the non-linear crystals. System 10 also does not have the power losses due to absorption and scattering associated with having to pass light 72 through a pinhole for power modulation.

Laser apparatus 100 obviates the need for an external modulation system EMS of FIG. 1B by employing internal modulation of laser apparatus 100. In particular, laser apparatus 100 employs either current modulation (CM) on laser diode assembly 50 via electrical signal S50 or pulse-width modulation (PWM) on Q-switch 64 via signal 564. Thus, internal modulation of laser apparatus 100, rather than external modulation, is used to control and deliver the designated amount of laser power to build material 22 when building object 32 via laser pulses 72P.

### Pulse-Width Modulation (PWM)

To carry out PWM in DPFMSS laser 50, the laser diode assembly 50 is provided with a continuous current *i₅₀* via signal S50 from power supply 56, and Q-switch 64 is modulated based on the build information stored in MU 96.

PWM of Q-switch 64 allows the intracavity gain medium of laser oscillator 60 to store energy over time and then release the energy in a very short time. This energy integration when the Q-switch is closed may continue indefinitely until the saturation limit has been reached.

In an example, a Nd:Orthovanadate non-linear crystal can reach saturation in around 50 microseconds. In an example, the PWM repetition rate is about 67 kHz, which is about 15 microseconds. Various non-linear crystals, such as Nd:OrthoVanadate or Nd:Yag, have quite high instantaneous energy dissipation when the Q-switch is opened, as the expended energy has a very short pulse length, on the order of nanoseconds. This means that the saturation intensity is never reached. As a consequence, PWM can be used to control of the amount of energy in each laser pulse 72P in laser beam 72 by controlling the Q-switch duty cycle, i.e., the time when the Q-switch 64 is in the open position (release of laser energy) as compared to time it is in the closed position (build-up of laser energy). The amount of energy for a particular laser pulse 72P is defined by the build instructions stored in MU 96 and the internal modulation of laser 40 rather than by an external modulation system as shown in the prior art configuration of FIG. 1B.

FIG. 2 is a schematic diagram of a series of example laser pulses 72P (72P-1, 72P-2, 72P-3,...72P-j) in laser beam 72. Each laser pulse 72P has nominally the same pulse width W (i.e., same Q-switch open time) but a different intensity as illustrated by the different heights of the pulses. In an example, the amount of energy in each pulse 72P is defined by how long Q-switch 64 is kept close, while the amount of time the Q-switch is open is the same for each pulse (thus providing each pulse with substantially the same pulse width W). In practice, the pulse width W can randomly vary, e.g., between 5 ns and 20 ns, due to non-linear effects in NLM system 70 and not from the Q-switch timing. In an example, the time interval TP between pulses can be on the order of microseconds, e.g., nominally 15 microseconds.

FIG. 3 includes an upper plot of the Q-switch signal S64 versus time, illustrating an example of the PWM control of the Q-switch. FIG. 3 also includes a lower plot of the corresponding output power in the laser pulses 72P corresponding to the PWM control of the Q-switch in the upper plot. The amplitude of pulses 72P are representative of the amount of energy in the given pulse. The pulses 72P are very narrow as compared to the amount to time the Q-switch is opened (0) and closed (1) because the pulses are typically 5 to 20 ns wide, while the open and close times for the Q-switch are measured in microseconds.

Performing PWM of the Q-switch 64 is an advantageous approach to controlling the average power in the laser beam 72 emitted by laser apparatus 100 because the other laser apparatus operating parameters, such as temperature, can be kept substantially constant. This reduces the chances of the light-generation process varying from laser pulse to laser pulse by amounts other than that intentionally imparted by the PWM process.

As the "charge-up" effect of laser oscillator 60 is the result of an exponential population inversion in the gain medium of the laser oscillator, the average output power of laser apparatus 100 as a function of the PWM duty cycle also grows exponentially. Concurrently, as the power increases out of the gain medium, the doubler, tripler, and/or quadrupler crystals will achieve non-linear conversion efficiencies as well, due to the non-linear nature of the conversion process.

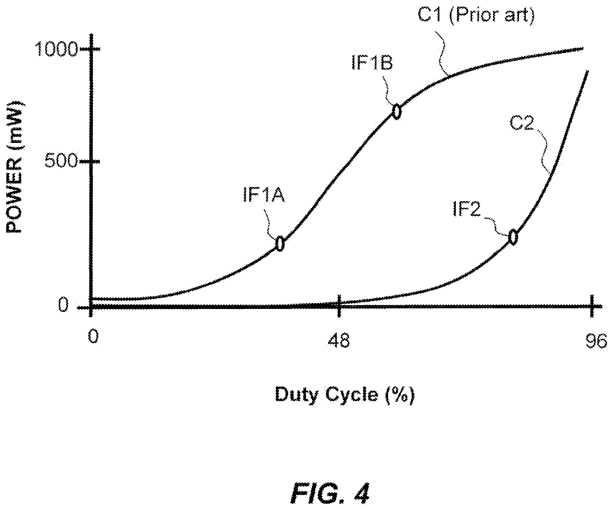

FIG. 4 is a plot of the power (mW) in laser beam 72 that exits DPFMSS laser 40 vs. the Q-switch duty cycle (in %). The curve C1 is for a prior art DPFMSS laser that utilizes an external modulation system having the aforementioned AOM-pinhole arrangement. The curve C2 is for the DPFMSS of the present disclosure that operates using internal power modulation and that does not include an external modulation system. The reference symbols IF1A and IF1 B denote two inflection points on curve C1 while IF2 denotes a single inflection point on curve C2. Curve C2 stays essentially at 0 output power up to a duty cycle of 50%, while curve C1 maintains 0 output power only up to about a 16% duty cycle.

Thus, to reduce the UV power to 0 mW, the PWM process can be carried out with a duty cycle of between 0 to 50%. As a DPFMSS tripled/quadrupled laser 40 may have as much as 20 cavity modes, it is beneficial to the pointing stability to operate the PWM process with a relatively high duty cycle, e.g., 50%. This serves to keep the laser idling, which reduces the possibility of any undesirable mode competition for dominance, which can adversely affect the quality of laser beam 72. In practice the duty cycle can range from 0 to 99.9%.

With continuing reference to FIG. 4, because the PWM process has only one inflection point IF2, the complexity of the laser calibration as the laser performance degrades is reduced. The laser calibration is performed by performing a curve-fit technique, such as a first or second order polynomial, solved by linear regression analysis for the relationship between the voltage responsible for the duty-cycle percentage and the output laser power. Afterwards, the solved polynomial is inverted, such that the DSP can immediately provide any power required. The required calibration resolution can be achieved by employing a 12 bit D/A converter as part of DSP 92. If more than one inflection point had occurred, then the DSP may request an inaccurate laser power as the laser's optical components degrade. Often, an inflection point indicates a region that would not scale linearly with the solved coefficients, thus requiring new data to be collected so that new coefficients could be found. Often an R² value (a measure of the suitability of a curve fit) of >0.998 is required to ensure adequate laser power accuracy.

In an example embodiment of the PWM of Q-switch 64, the PWM commands embodied in PWM signal S66 are buffered in MU 96, which in an example comprises a high-speed DSP memory. As encoders 82 provide feedback about the positions of the motors (not shown) that drive the scanning mirrors in scanning system 80, one can predict where the motors will be at a certain time. This requires shuffling the queue of the PWM power forward in time or backward in time, as the case may be, to keep the PWM process synchronized with the build process.

### Current Modulation

CM is advantageous for decreasing the cost of ownership of a stereolithographic system. This is because laser diode assembly 50 can be operated at a low current when low laser powers are requested, thus increasing the longevity of the pump laser diodes 52. In conventional stereolithography systems that employ the AOM/pinhole configuration, laser diode assembly 50 is operated at high current, which causes a great deal of wear and tear on laser 40 and in particular on laser diodes 54.

The energy supplied to laser diodes 54 in laser diode assembly 50 via power supply 56 is provided in a forward-biased configuration. In an example, laser diode assembly 50 includes external leads (not shown) that provide a temperature signal, an optical power feedback signal, or both. Most laser diode assemblies 50 require a high current with a relatively low voltage to operate. In one example, 6 amps or even 25 amps with only 2 volts could be used to adequately operate the laser diodes 54 within laser diode assembly 50.

Due to the high current and low internal resistance of laser diodes 54, the current *i₅₀* injected into the anode of the laser diodes 54 must be highly regulated. Due to the potential for thermal runaway and spectral shifts, the laser diodes 54 must be held substantially constant. Thermal runaway occurs when the internal resistance of the laser diode decreases due to an increase in temperature so that the same applied voltage corresponds to a greater current to be consumed. This in turn increases the laser diode temperature, which once again decreases the internal resistance, and so on. Spectral shifts occur when the temperature of the laser diodes 54 increases or.decreases. Often, the nominal output pump wavelength of the pump light 52 from the laser diodes 54 can drift by several nanometers without adequate temperature regulation.

To achieve suitable laser stability for stereolithography, it is necessary to carefully regulate the temperature of laser diode assembly 50 so that the laser diodes 54 therein are maintained at a substantially fixed temperature. In an example, the temperature of laser diode assembly 50 must be maintained to within 0.05 degrees C, which requires that the external heat sink 44 be regulated within 0.1 degrees C. However, the external heat sink 44 does not have a fast response time and so is only capable of managing temperature fluctuations that occur over relatively long time periods, e.g., 10 minutes.

During the build process for forming three-dimensional object 32, each lamina 30 can generally take from between 5 seconds to 2 minutes to form, followed by a substantial rest interval (typically 30 seconds) before forming the next lamina. This variation in the build process leads to variability in the temperature, of laser apparatus 100. This temperature variability causes a shift in the direction of laser beam 72 as well in the maximum output power of laser 40 due to the non-linear changes of the index of refraction of non-linear crystals that make up NLM system 70.

To ensure laser stability over relatively short time intervals (e.g., from minute to minute) for both the CM and PWM modes of operation, system 10 is provided with a laser power meter 200 configured to measure the amount of power in laser beam 72. In an example, this is accomplished by placing the aforementioned light-deflecting element 202 in the external optical path OPE to deflect a small portion 72' of laser beam 72 to laser power meter 200.

Laser power meter 200 is electrically connected to controller 90 and provides to the controller an electrical signal 5200 representative of the measured power in laser beam 72. In an example, laser power meter 200 integrates a large number of laser pulses (e.g., about 10⁵ pulses) to provide an averaged power measurement and also to allow the laser power meter to thermally stabilize. In an example, laser power meter 200 measures power in mW/cm².

In addition, system 10 includes a laser focus position detector 220 also electrically connected to controller 90. Laser focus position detector 220 is in optical communication with build surface 23 and detects a focus position FP of laser beam 72 on the build surface. Laser focus position detector 220 provides to controller 90 an electrical signal S220 representative of the focus position FP of laser beam 72 on build surface 23.

Controller 90 is configured receive electrical signals S200 and S220 and process these signals to compensate for any shifts in the direction of laser beam 72 (as indicated by a change in focus position FP from the required focus position based on the build instructions), and any changes in the output power in laser beam 72 (as indicated by the measured output power from laser power meter 200). For the PWM mode, controller 90 is configured to adjust the PWM to adjust for variations in the laser beam power as compared to the amount laser beam power (or in particular, the laser pulse energy) required by the build information.

To perform current modulation of laser apparatus 100, in an example a 12 bit D/A converter 93 residing in the DSP 92 is commanded by the aforementioned high-speed memory buffer of MU 96, which is synchronized with the scanning motor feedback from encoders 82 and positioning control system in scanning system 80. The D/A converter 93 is connected directly to an input on pulse generation circuit 98, which in an example embodiment is configured to regulate the amount of current provided to laser diode assembly 50 from power supply 56.

During the CM process, Q-switch 64 is operated at a constant duty cycle and is not used to change the amount of energy in laser pulses 72P. An example Q-switch repetition rate is in the range from between 30 kilohertz and 120 kilohertz, with an exemplary repetition rate being 67 kilohertz. If the repetition rate were to be substantially faster than about 120 kHz, then the laser cavity is depleted of energy before it has completed its charging cycle. If the repetition rate were substantially slower that 20 KHz, then the delay time between the formation of bullets in forming laminae 30 would become unduly lengthy, and the ability to form fine details in three-dimensional object 32 can suffer.

### Improved bullet formation

As described above, aspects of the disclosure include internally modulating a DPFMSS laser 40 by CM or PWM to generate a stable laser beam 72 that is then used to form a three-dimensional object 32 from build material 22 layers 30.

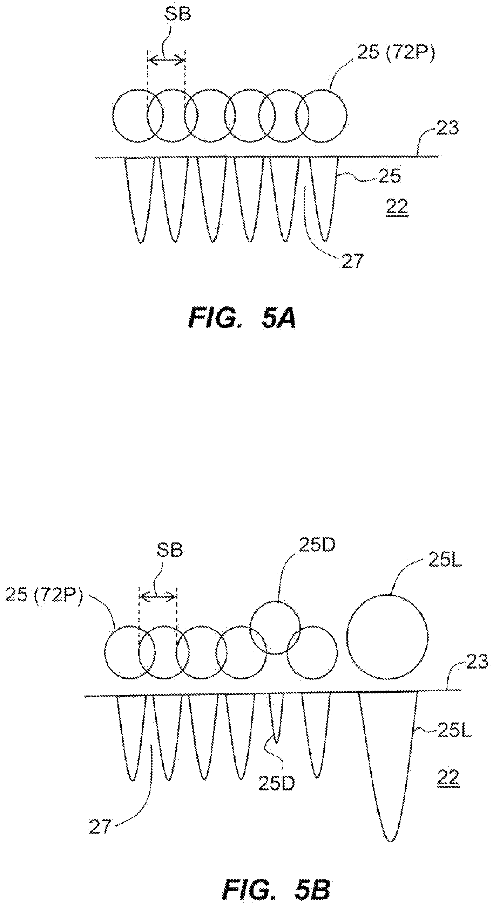

FIG. 5A is a schematic diagram showing both a top-down and a cross-sectional view of bullets 25 formed in build material 22 by laser pulses 72P. As discussed above, in carrying out stereolithography, laser beam 72 is drawn on the surface 23 (i.e., the target surface or working surface) of build material 22 at focus spot FP (see FIG. 1A). Since laser beam 72 is constituted by laser pulses 72P, the curing of a continuous line of build material 22 requires that the build material 22 be subjected to successive laser pulses 72P that overlap sufficiently to ensure adhesion between successively solidified regions, i.e., the aforementioned bullets 25. An example measure of a spacing SB is shown between adjacent bullets 25.

As the pulse duration for laser pulses 72P is typically very short (e.g., 5 to 20 ns), the movement of laser beam 72 during a pulse duration can be considered negligible. The spacing SB between adjacent bullets 25 is called the "step size". The step size SB is equivalent to the ratio of the velocity of laser beam 72 to the pulse repetition rate. As each laser pulse 72P has a width and energy associated with it, when interacting with build material 22, a particular deposition pattern of energy will occur.

Where the deposited energy from laser pulse 72P exceeds a critical exposure energy Ec associated with build material 22, solidification of the build material will occur. A single pulse 72P of laser beam 72 will result in the formation of a corresponding bullet 25 of solidified material, which is surrounded by a region 27 of partially polymerized but not yet gelled build material, which is a region of subcritical exposure. If two laser pulses 72P occur sufficiently close together such that their individual subcritical regions of exposure overlap, adhesion between the otherwise independent bullets 25 can occur if the region 27 between the bullets has received sufficient energy from the two pulses to exceed the critical exposure energy Ec.

Typically, the step size SB is equal to or less than the width of cure from a single pulse. However, as adhesion might occur at even a somewhat wider spacing due to overlapping regions 27 of subcritical exposure, in some cases it is possible to use a larger step size. Preferably, the step size is less than half the width of cure from a single laser pulse 72P (i.e., the half width of an individual bullet 25). Thus, the maximum scanning velocity for laser beam 72 is dictated by the pulse repetition rate and the effective width of laser beam 72 (i.e., the width of cure associated with a single laser pulse 72P).

FIG. 5B is similar to FIG. 5A and illustrates an example where one laser pulse 72P was displaced, thereby forming an offset bullet 25D, and also shows an example where one laser pulse had too much energy, resulting in an unusually large bullet 25L.

The cure depth (and thus bullet formation) is affected by the laser power, M-squared value, divergence, and beam waist position. The half-width of the laser spot is more affected by the divergence, but other parameters are almost as important. The power is affected by the internal alignment and temperatures of the laser.

The internal modulation of DPFMSS laser 40 allows for the simplified formation of bullets 25 and thus the simplified formation of a three-dimensional object 32 because many if not most of the beam control issues are mitigated. Also, the use of laser power meter 200 and laser focus position detector 220 ensure the that the proper amount of laser beam power is maintained and that the focus position does not wander.

An example method of forming the three-dimensional object 32 using system 10 includes the following steps:
(1) Receive object data (build information) in controller 90 representing a three-dimensional object 32, for example in a STL file format or CAD file format;
(2) Convert the object data into cross-sectional data and store in MU 96 as build information;
(3) For a given cross-section of the object, convert the cross-sectional data into data descriptive of scanning paths to be followed;
(4) Convert one copy of the scanning path data into scanning system positioning data, including any system calibration data and drift correction data;
(5) From a combination of the cross-sectional data, scanning system positioning data, and build style data, define laser pulse focus positions FP for the cross-section;
(6) Move the laser beam 72 along the paths defined by the scanning path data and compare the actual beam position to focus positions;
(7) Generate laser pulses 72P when the focus positions are encountered while defining the amount of energy in each laser pulse using internal modulation based on either a CM or a PWM process as described above;
(8) Repeat steps (2)-(7) for the next (adjacent) lamina (build layer) to be formed until the three-dimensional object 32 is completed.

### Advantages

The internal modulation approach to bullet formation and SFF has a number of advantages over the conventional approach that utilizes an external modulation system EMS such as shown in FIG. 1B.

A first advantage is that it allows for a simpler design for system 10 in that there is no need for the external modulation system and no need for managing alignment and calibration issues associated with an external modulation system. A second advantage is that the light scattering caused by AOM and pinhole configuration is avoided so that objects 32 can be formed with sharper features when used with build material 22 that can support a fine-detailed object.

A third advantage is that DPFMSS laser 40 no longer needs high-intensity pump light 52. As the overall conversion efficiency is greater, the same UV energy is created with much less IR pump energy from laser diodes 54. This leads to other advantages relating to the stability and cost of ownership of laser apparatus 100, including the elimination of a) a chiller to cool laser diode assembly 50, b) crystal translation to increase the NL crystal's lifetime, c) the AOM, d) AOM RF driver, e) AOM blocking pinhole, f) the need for periodic AOM alignment, g) shortened laser lifetime, h) AOM driver causing RF noise in the scanning motor feedback lines, i) AOM laser positioning errors caused by thermal displacement, and j) power curve anomalies.

## Claims

1. A method of forming a three-dimensional object (32) from a build material (22) using a diode-pumped frequency-multiplied solid-state (DPFMSS) laser (40) having a Q-switch (64) and a laser diode assembly (50), the method comprising:
controlling the DPFMSS laser (40) by internal modulation using current modulation of the laser diode assembly (50), to generate a laser beam (72) comprising laser pulses (72P) having a select energy that define a laser beam power, the select energy being based on build instructions for building the three-dimensional object (32);
directing the laser beam (72) from the laser to a scanning system (80) over an external optical path without performing external modulation within the external optical path;
using the scanning system (80), directing the laser beam (72) to a focus position on the build material (22) to form bullets therein to define a build layer (30) based on the build instructions; and
repeating the build layer formation to form the three-dimensional object (32) from the build material (22) while adjusting the laser beam power and the focus position to correct for variations in the laser beam power and the focus position.

2. A method of forming a three-dimensional object (32) from a build material (22) using a diode-pumped frequency-multiplied solid-state (DPFMSS) laser (40) having a Q-switch (64) and a laser diode assembly (50), the method comprising:
controlling the DPFMSS laser (40) by internal modulation using pulse-width modulation of the Q-switch (64), to generate a laser beam (72) comprising laser pulses (72P) having a select energy that define a laser beam power, the select energy being based on build instructions for building the three-dimensional object (32);
directing the laser beam (72) from the laser to a scanning system (80) over an external optical path without performing external modulation within the external optical path;
using the scanning system (80), directing the laser beam (72) to a focus position on the build material (22) to form bullets therein to define a build layer (30) based on the build instructions; and
repeating the build layer formation to form the three-dimensional object (32) from the build material (22) while adjusting the laser beam power and the focus position to correct for variations in the laser beam power and the focus position.

3. The method of claim 1, wherein the DPFMSS laser (40) is controlled by current modulation, and further comprising:
operating the Q-switch (64) at a fixed frequency;
monitoring the laser beam power; and
controlling an amount of current modulation to the laser diode assembly (50) based on the monitored amount of laser beam power.

4. The method of claim 3, further comprising:
deflecting a portion of the laser beam to a laser power meter; and
generating an electrical signal representative of the laser beam power and providing the electrical signal to a controller configured to control the laser beam power.

5. The method of claim 3, wherein adjusting the focus position includes:
monitoring the focus position; and
controlling the scanning system (80) to adjust for a variation in focus position based on the build instructions.

6. The method according to claim 2, wherein the controlling of the DPFMSS laser (40) employs pulse-width modulation, and further comprising:
performing the pulse-width modulation with a duty cycle of between 0 % and 99.9%; and
providing a substantially constant current to the laser diode assembly.

7. A stereolithography system for forming a three-dimensional object (32) from a build material (22), comprising:
a diode-pumped frequency-multiplied solid-state (DPFMSS) laser (40) having a Q-switch (64) and a laser diode assembly (50) and configured to generate a laser beam (72) having laser pulses;
a controller(90) having build instructions for building the three-dimensional object (32), wherein the build instructions define select amounts of energy in the laser pulses, the controller (90) being configured to cause the DPFMSS laser (40) to operate in a current modulation mode to provide the select amounts of energy to the laser pulses;
a scanning system (80) arranged to receive the laser beam from the DPFMSS laser (40) over an external optical path that does not include an external modulation system, the scanning system configured to direct the laser beam (72) to a focus position on the build material (22) to form bullets therein to define a build layer (30) based on the build instructions;
a laser power meter (200) configured to measure an amount of power in the laser beam and provide an electrical signal to the controller representative of the amount of laser beam power, the controller being configured to adjust an amount of current provided to the laser diode assembly to adjust for a variation in the laser beam power.

8. The system of claim 7, further comprising a light-deflecting member (202) configured to deflect a portion of the laser beam (72) traveling within the external optical path to a laser power meter (200).

9. The system of claim 7, further comprising a laser focus position detector (220) arranged in optical communication with build surface (25) to detect the focus position on the build surface (23) and provide an electrical signal to the controller (90) representative of the focus position, the controller (90) being configured to adjust the scanning system (80) to adjust for a variation in the focus position.

10. A stereolithography system for forming a three-dimensional object (32) from a build material (22), comprising:
a diode-pumped frequency-multiplied solid-state (DPFMSS) laser (40) having a Q-switch (64) and a laser diode assembly (50) and configured to generate a laser beam (72) having laser pulses;
a controller (90) having build instructions for building the three-dimensional object (32), wherein the build instructions define select amounts of energy in the laser pulses, the controller (90) being configured to cause the DPFMSS laser (32) to operate in a pulse-width modulation mode to provide the select amounts of energy to the laser pulses; and
a scanning system (80) arranged to receive the laser beam (72) from the DPFMSS laser (40) over an external optical path that does not include an external modulation system, the scanning system (80) configured to direct the laser beam (72) to a focus position on the build material to form bullets therein to define a build layer (30) based on the build instructions.

11. The system of claim 10, further comprising the controller configured to provide a substantially constant current to the laser diode assembly (50) while performing the pulse-width modulation with a duty cycle of between 0 % and 99.9%.

12. The system of claim 10, further comprising a laser focus position detector (220) arranged in optical communication with build surface (23) to detect the focus position on the build surface (23) and provide an electrical signal to the controller (90) representative of the focus position, the controller being configured to adjust the scanning system (80) to adjust for a variation in the focus position.

13. The system of claim 12, further comprising a laser power meter (200) configured to measure an amount of power in the laser beam (72) and provide an electrical signal to the controller (90) representative of the amount of laser beam power, the controller (90) being configured to adjust the pulse-width modulation amount to adjust for a variation in the laser beam power.

## Patentansprüche

1. Verfahren zur Bildung eines dreidimensionalen Objekts (32) aus einem Baumaterial (22) unter Verwendung eines diodengepumpten frequenzmultiplizierten Feststofflasers (DPFMSS-Lasers) (40) mit einem Güteschalter (64) und einer Laserdioden-Baugruppe (50), wobei das Verfahren umfasst:
Steuern des DPFMSS-Lasers (40) durch interne Modulation mit Hilfe einer Strommodulation der Laserdioden-Baugruppe (50) unter Erzeugung eines Laserstrahls (72), der Laserimpulse (72P) mit einer ausgewählten Energie umfasst, die die Laserstrahlleistung definieren, wobei die ausgewählte Energie auf Bauanleitungen zum Bauen des dreidimensionalen Objekts (32) beruht;
Lenken des Laserstrahls (72) vom Laser zu einem Scanning-System (80) über einen externen Lichtweg, ohne innerhalb des externen Lichtwegs eine externe Modulation durchzuführen;
Lenken des Laserstrahls (72) unter Verwendung des Scanning-Systems (80) auf eine Fokusposition auf dem Baumaterial (22) unter Bildung von Kugeln darin, um auf der Basis der Bauanleitungen eine Bauschicht (30) zu definieren; und
Wiederholen der Bauschichtbildung unter Bildung des dreidimensionalen Objekts (32) aus dem Baumaterial (22), während die Laserstrahlleistung und die Fokusposition so eingestellt werden, dass Variationen in der Laserstrahlleistung und der Fokusposition korrigiert werden.

2. Verfahren zur Bildung eines dreidimensionalen Objekts (32) aus einem Baumaterial (22) unter Verwendung eines diodengepumpten frequenzmultiplizierten Feststofflasers (DPFMSS-Lasers) (40) mit einem Güteschalter (64) und einer Laserdioden-Baugruppe (50), wobei das Verfahren umfasst:
Steuern des DPFMSS-Lasers (40) durch interne Modulation mit Hilfe einer Impulsbreitenmodulation des Güteschalters (64) unter Erzeugung eines Laserstrahls (72), der Laserimpulse (72P) mit einer ausgewählten Energie umfasst, die die Laserstrahlleistung definieren, wobei die ausgewählte Energie auf Bauanleitungen zum Bauen des dreidimensionalen Objekts (32) beruht;
Lenken des Laserstrahls (72) vom Laser zu einem Scanning-System (80) über einen externen Lichtweg, ohne innerhalb des externen Lichtwegs eine externe Modulation durchzuführen;
Lenken des Laserstrahls (72) unter Verwendung des Scanning-Systems (80) auf eine Fokusposition auf dem Baumaterial (22) unter Bildung von Kugeln darin, um auf der Basis der Bauanleitungen eine Bauschicht (30) zu definieren; und
Wiederholen der Bauschichtbildung unter Bildung des dreidimensionalen Objekts (32) aus dem Baumaterial (22), während die Laserstrahlleistung und die Fokusposition so eingestellt werden, dass Variationen in der Laserstrahlleistung und der Fokusposition korrigiert werden.

3. Verfahren gemäß Anspruch 1, wobei der DPFMSS-Laser (40) durch Strommodulation gesteuert wird, und weiterhin umfassend:
Betreiben des Güteschalters (64) mit einer festen Frequenz;
Überwachen der Laserstrahlleistung; und
Steuern der Menge der Strommodulation zur Laserdioden-Baugruppe (50) auf der Basis der überwachten Menge der Laserstrahlleistung.

4. Verfahren gemäß Anspruch 3, weiterhin umfassend:
Ablenken eines Teils des Laserstrahls zu einem Laserleistungsmessgerät; und
Erzeugen eines elektrischen Signals, das repräsentativ für die Laserstrahlleistung ist, und Liefern des elektrischen Signals an einen Regler, der so konfiguriert ist, dass er die Laserstrahlleistung steuert.

5. Verfahren gemäß Anspruch 3, wobei das Einstellen der Fokusposition umfasst:
Überwachen der Fokusposition; und
Steuern des Scanning-Systems (80), um auf der Basis der Bauanleitungen eine Variation der Fokusposition einzustellen.

6. Verfahren gemäß Anspruch 2, wobei beim Steuern des DPFMSS-Lasers (40) eine Impulsbreitenmodulation eingesetzt wird, und weiterhin umfassend:
Durchführen der Impulsbreitenmodulation mit einem Tastverhältnis zwischen 0% und 99,9%; und
Liefern eines im Wesentlichen konstanten Stroms an die Laserdioden-Baugruppe.

7. Stereolithographiesystem zur Bildung eines dreidimensionalen Objekts (32) aus einem Baumaterial (22), umfassend:
einen diodengepumpten frequenzmultiplizierten Feststofflaser (DPFMSS-Laser) (40) mit einem Güteschalter (64) und einer Laserdioden-Baugruppe (50), der so konfiguriert ist, dass er einen Laserstrahl (72) mit Laserimpulsen erzeugt;
einen Regler (90) mit Bauanleitungen zum Bauen des dreidimensionalen Objekts (32), wobei die Bauanleitungen ausgewählte Energiemengen in den Laserimpulsen definieren, wobei der Regler (90) so konfiguriert ist, dass er bewirkt, dass der DPFMSS-Laser (40) in einem Strommodulationsmodus arbeitet, um die ausgewählten Energiemengen an die Laserimpulse zu liefern;
ein Scanning-System (80), das so angeordnet ist, dass es den Laserstrahl vom DPFMSS-Laser (40) über einen externen Lichtweg, der kein externes Modulationssystem umfasst, empfängt, wobei das Scanning-System so konfiguriert ist, dass es den Laserstrahl (72) auf eine Fokusposition auf dem Baumaterial (22) lenkt, wobei Kugeln darin entstehen, um auf der Basis der Bauanleitungen eine Bauschicht (30) zu definieren;
ein Laserleistungsmessgerät (200), das so konfiguriert ist, dass es eine Leistungsmenge in dem Laserstrahl misst und ein elektrisches Signal, das repräsentativ für die Laserstrahlleistungsmenge ist, an den Regler liefert, wobei der Regler so konfiguriert ist, dass er eine Strommenge einstellt, die an die Laserdiodenbaugruppe geliefert wird, um eine Variation in der Laserstrahlleistung einzustellen.

8. System gemäß Anspruch 7, weiterhin umfassend ein Lichtablenkungselement (202), das so konfiguriert ist, dass es einen Teil des Laserstrahls (72), der sich innerhalb des externen Lichtwegs bewegt, zu einem Laserleistungsmessgerät (200) ablenkt.

9. System gemäß Anspruch 7, weiterhin umfassend einen Laserfokus-Positionsdetektor (220), der in optischer Kommunikation mit der Baufläche (25) angeordnet ist, um die Fokusposition auf der Baufläche (23) nachzuweisen und ein elektrisches Signal, das repräsentativ für die Fokusposition ist, an den Regler (90) zu liefern, wobei der Regler (90) so konfiguriert ist, dass er das Scanning-System (80) so einstellt, dass es eine Variation in der Fokusposition einstellt.

10. Stereolithographiesystem zur Bildung eines dreidimensionalen Objekts (32) aus einem Baumaterial (22), umfassend:
einen diodengepumpten frequenzmultiplizierten Feststofflaser (DPFMSS-Laser) (40) mit einem Güteschalter (64) und einer Laserdioden-Baugruppe (50), der so konfiguriert ist, dass er einen Laserstrahl (72) mit Laserimpulsen erzeugt;
einen Regler (90) mit Bauanleitungen zum Bauen des dreidimensionalen Objekts (32), wobei die Bauanleitungen ausgewählte Energiemengen in den Laserimpulsen definieren, wobei der Regler (90) so konfiguriert ist, dass er bewirkt, dass der DPFMSS-Laser (32) in einem Impulsbreitenmodulationsmodus arbeitet, um die ausgewählten Energiemengen an die Laserimpulse zu liefern; und
ein Scanning-System (80), das so angeordnet ist, dass es den Laserstrahl (72) vom DPFMSS-Laser (40) über einen externen Lichtweg, der kein externes Modulationssystem umfasst, empfängt, wobei das Scanning-System (80) so konfiguriert ist, dass es den Laserstrahl (72) auf eine Fokusposition auf dem Baumaterial lenkt, wobei Kugeln darin entstehen, um auf der Basis der Bauanleitungen eine Bauschicht (30) zu definieren.

11. System gemäß Anspruch 10, weiterhin umfassend den Regler, der so konfiguriert ist, dass er einen im Wesentlichen konstanten Strom an die Laserdioden-Baugruppe (50) liefert, während er eine Impulsbreitenmodulation mit einem Tastverhältnis zwischen 0% und 99,9% durchführt.

12. System gemäß Anspruch 10, weiterhin umfassend einen Laserfokus-Positionsdetektor (220), der in optischer Kommunikation mit der Baufläche (23) angeordnet ist, um die Fokusposition auf der Baufläche (23) zu erkennen und ein elektrisches Signal, das repräsentativ für die Fokusposition ist, an den Regler (90) zu liefern, wobei der Regler (90) so konfiguriert ist, dass er das Scanning-System (80) so einstellt, dass es eine Variation in der Fokusposition einstellt.

13. System gemäß Anspruch 12, weiterhin umfassend ein Laserleistungsmessgerät (200), das so konfiguriert ist, dass es eine Leistungsmenge in dem Laserstrahl (72) misst und ein elektrisches Signal, das repräsentativ für die Laserstrahlleistungsmenge ist, an den Regler (90) liefert, wobei der Regler (90) so konfiguriert ist, dass er die Impulsbreitenmodulationsmenge so einstellt, dass eine Variation in der Laserstrahlleistung eingestellt wird.

## Revendications

1. Procédé pour former un objet tridimensionnel (32) à partir d'un matériau de construction (22) en utilisant un laser à semi-conducteurs à multiplication de fréquence à pompage par diode (DPFMSS) (40) avec commutateur-Q (64) et ensemble à diode laser (50), comprenant les étapes consistant à :
commander le laser DPFMSS (40) par modulation interne en utilisant une modulation de courant de l'ensemble à diode laser (50) pour produire un faisceau laser (72) comprenant des impulsions laser (72P) ayant une énergie sélectionnée qui définissent la puissance du faisceau laser, l'énergie sélectionnée étant basée sur des instructions d'assemblage pour construire l'objet tridimensionnel (32),
diriger le faisceau laser (72) à partir du laser vers un système de balayage (80) par un trajet optique externe sans effectuer une modulation externe au sein du trajet optique externe,
en utilisant le système de balayage (80), diriger le faisceau laser (72) vers une position focale sur le matériau de construction (22) pour former des balles dedans pour définir une couche de construction (30) sur la base d'instructions d'assemblage, et
répéter la formation de la couche de construction pour former l'objet tridimensionnel (32) à partir du matériau de construction (22), tout en ajustant la puissance du faisceau laser et la position focale pour corriger des variations de la puissance du faisceau laser et de la position focale.

2. Procédé pour former un objet tridimensionnel (32) à partir d'un matériau de construction (22) en utilisant un laser à semi-conducteurs à multiplication de fréquence à pompage par diode (DPFMSS) (40) avec commutateur-Q (64) et ensemble à diode laser (50), comprenant les étapes consistant à :
commander le laser DPFMSS (40) par modulation interne en utilisant une modulation de largeur d'impulsions du commutateur-Q (64) pour produire un faisceau laser (72) comprenant des impulsions laser (72P) ayant une énergie sélectionnée qui définissent la puissance du faisceau laser, l'énergie sélectionnée étant basée sur des instructions d'assemblage pour construire l'objet tridimensionnel (32),
diriger le faisceau laser (72) à partir du laser vers un système de balayage (80) par un trajet optique externe sans effectuer une modulation externe au sein du trajet optique externe,
en utilisant le système de balayage (80), diriger le faisceau laser (72) vers une position focale sur le matériau de construction (22) pour former des balles dedans pour définir une couche de construction (30) sur la base d'instructions d'assemblage, et
répéter la formation de la couche de construction pour former l'objet tridimensionnel (32) à partir du matériau de construction (22), tout en ajustant la puissance du faisceau laser et la position focale pour corriger des variations de la puissance du faisceau laser et de la position focale.

3. Procédé selon la revendication 1, dans lequel le laser DPFMSS (40) est commandé par modulation de courant, et comprenant en outre les étapes consistant à :
actionner le commutateur-Q (64) à une fréquence fixe,
surveiller la puissance du faisceau laser, et
contrôler la quantité de la modulation de courant de l'ensemble à diode laser (50) sur la base de la quantité surveillée de la puissance du faisceau laser.

4. Procédé selon la revendication 3, comprenant en outre les étapes consistant à:
dévier une partie du faisceau laser vers un mesureur de puissance laser, et
générer un signal électrique représentatif de la puissance du faisceau laser et fournir le signal électrique à un régulateur configuré pour contrôler la puissance du faisceau laser.

5. Procédé selon la revendication 3, dans lequel l'ajustement de la position focale comprend :
la surveillance de la position focale, et
le commandement du système de balayage (80) pour ajuster une variation de la position focale sur la base des instructions d'assemblage.

6. Procédé selon la revendication 2, dans lequel le commandement du laser DPFMSS (40) se fait en utilisant une modulation de largeur d'impulsions, et comprenant en outre les étapes consistant à :
effectuer la modulation de largeur d'impulsions avec un cycle de service d'entre 0 % et 99,9 %, et
fournir un courant sensiblement constant à l'ensemble à diode laser.

7. Système de stéréolithographie pour former un objet tridimensionnel (32) à partir d'un matériau de construction (22), comprenant :
un laser à semi-conducteurs à multiplication de fréquence à pompage par diode (DPFMSS) (40) avec commutateur-Q (64) et ensemble à diode laser (50), configuré pour produire un faisceau laser (72) ayant des impulsions laser,
un contrôleur (90) ayant des instructions d'assemblage pour construire l'objet tridimensionnel (32), dans lequel les instructions d'assemblage définissent des quantités sélectionnées d'énergie dans les impulsions laser, le contrôleur (90) étant configuré pour provoquer l'émission du laser DPFMSS (40) dans un mode de modulation de courant pour fournir les quantités sélectionnées d'énergie aux impulsions laser,
un système de balayage (80) arrangé pour recevoir le faisceau laser à partir du laser DPFMSS (40) par un trajet optique externe qui n'inclue pas de système de modulation externe, le système de balayage étant configuré pour diriger le faisceau laser (72) vers une position focale sur le matériau de construction (22) pour former des balles dedans pour définir une couche de construction (30) sur la base d'instructions d'assemblage,
un mesureur de puissance laser (200) configuré pour mesurer une quantité de puissance dans le faisceau laser et fournir un signal électrique représentatif de la quantité de puissance du faisceau laser au régulateur, le régulateur étant configuré pour ajuster la quantité du courant fourni à l'ensemble à diode laser pour ajuster une variation de la puissance du faisceau laser.

8. Système selon la revendication 7, comprenant en outre un élément déviant la lumière (202) configuré pour dévier une partie du faisceau laser (72) parcourant au sein du trajet optique externe vers un mesureur de puissance laser (200).

9. Système selon la revendication 7, comprenant en outre un détecteur de position focale du laser (220) arrangé en communication optique avec la surface construite (25) pour détecter la position focale sur la surface construite (23) et fournir un signal électrique représentatif de la position focale au régulateur (90), le régulateur (90) étant configuré pour ajuster le système de balayage (80) pour ajuster une variation de la position focale.

10. Système de stéréolithographie pour former un objet tridimensionnel (32) à partir d'un matériau de construction (22), comprenant :
un laser à semi-conducteurs à multiplication de fréquence à pompage par diode (DPFMSS) (40) avec commutateur-Q (64) et ensemble à diode laser (50), configuré pour produire un faisceau laser (72) ayant des impulsions laser,
un contrôleur (90) ayant des instructions d'assemblage pour construire l'objet tridimensionnel (32), dans lequel les instructions d'assemblage définissent des quantités sélectionnées d'énergie dans les impulsions laser, le contrôleur (90) étant configuré pour provoquer l'émission du laser DPFMSS (32) dans un mode de modulation de largeur d'impulsions pour fournir les quantités sélectionnées d'énergie aux impulsions laser, et
un système de balayage (80) arrangé pour recevoir le faisceau laser à partir du laser DPFMSS (40) par un trajet optique externe qui n'inclue pas de système de modulation externe, le système de balayage étant configuré pour diriger le faisceau laser (72) vers une position focale sur le matériau de construction (22) pour former des balles dedans pour définir une couche de construction (30) sur la base d'instructions d'assemblage.

11. Système selon la revendication 10, comprenant en outre le régulateur configuré pour fournir un courant sensiblement constant à l'ensemble à diode laser (50) tout en effectuant la modulation de largeur d'impulsions avec un cycle de service d'entre 0 % et 99,9 %.

12. Système selon la revendication 10, comprenant en outre un détecteur de position focale du laser (220) arrangé en communication optique avec la surface construite (23) pour détecter la position focale sur la surface construite (23) et fournir un signal électrique représentatif de la position focale au régulateur (90), le régulateur (90) étant configuré pour ajuster le système de balayage (80) pour ajuster une variation de la position focale.

13. Système selon la revendication 12, comprenant en outre un mesureur de puissance laser (200) configuré pour mesurer une quantité de puissance dans le faisceau laser (72) et fournir un signal électrique représentatif de la quantité de puissance du faisceau laser au régulateur (90), le régulateur (90) étant configuré pour ajuster la quantité de la modulation de largeur d'impulsions pour ajuster une variation de la puissance du faisceau laser.
